# EUROPÄISCHE PATENTANMELDUNG

(11) **EP 4 574 749 A1**
(43) Veröffentlichungstag der Anmeldung: **25.06.2025**
(21) Anmeldenummer: 23020559.3
(22) Anmeldetag: 19.12.2023
(51) Int. Cl.: C01B 3/04, B01D 53/047, C01B 3/50, C25B 1/042

(54) **VERFAHREN UND ANLAGE ZUR HERSTELLUNG EINES WASSERSTOFFPRODUKTS**

(71) Anmelder: Linde GmbH, 82049 Pullach (DE)
(72) Erfinder: Reinke, Michael, 82049 Pullach (DE); Murer, Martin, 82049 Pullach (DE)
(74) Vertreter: Fischer, Werner

(57) **Zusammenfassung**

Die Erfindung betrifft ein Verfahren sowie eine Anlage Verfahren zur Erzeugung eines Wasserstoffprodukts (12), bei dem ein erster Teil eines bereitgestellten Ammoniaks (F) überhitzt und in einem Spalteinsatz (1) einer brennerbefeuerten Spaltofenanordnung (S) zugeführt wird, um mit katalytischer Unterstützung zu einem Wasserstoff, Stickstoff und Ammoniak enthaltenden Spaltgas (3) umgesetzt zu werden, von dem zumindest ein Teil einer Trenneinrichtung (T) zugeführt wird, in der eine Wasserstofffraktion (6) sowie ein gegenüber dem Spaltgas (3) an Stickstoff angereichertes, Wasserstoff und Ammoniak enthaltendes Restgas (7) erhalten werden, von dem zumindest ein Teil zusammen mit einem zweiten Teil (14) des bereitgestellten Ammoniaks (F) zur Befeuerung der Spaltofenanordnung (S) eingesetzt wird. Kennzeichnend hierbei ist, dass der zweite Teil (14) des bereitgestellten Ammoniaks (F) vor seinem Einsatz zur Befeuerung der Spaltofeneinrichtung (S) überhitzt wird.

## Beschreibung

Die vorliegende Erfindung betrifft ein Verfahren und eine Anlage zur Herstellung eines Wasserstoffprodukts aus Ammoniak.

### Hintergrund

Bei der Ammoniakspaltung handelt es sich um die katalytische Zersetzung von zwei Molekülen Ammoniak in ein Molekül Stickstoff und drei Moleküle Wasserstoff. Die Ammoniakspaltung ist endotherm, wobei die Reaktionsgeschwindigkeit von Temperatur, Druck und dem verwendeten Katalysator abhängt.

Die Ammoniakspaltung kann als Teil einer Wasserstoffspeichertechnologie genutzt werden, wobei Wasserstoff, beispielsweise mittels des großtechnisch etablierten Haber-Bosch-Verfahrens, zu Ammoniak verarbeitet wird, der sich erheblich besser speichern und transportieren lässt als Wasserstoff oder auch Erdgas bzw. Methan aus anderen Quellen. Die existierende Synthese- und Transportinfrastruktur für Ammoniak ist technologisch ausgereift und sicher.

In Kombination mit in Bezug auf Kohlendioxid emissionsfrei gewonnenem Wasserstoff hat diese Technologie damit das Potential, ein wichtiger Baustein in der zukünftigen Energieversorgung der Industrie und des Mobilitätssektors zu werden.

### Überblick

Vor diesem Hintergrund werden eine Anlage und ein Verfahren zur Ammoniakspaltung mit den Merkmalen der unabhängigen Patentansprüche vorgeschlagen. Vorteilhafte Ausgestaltungen und Weiterbildungen sind Gegenstand der abhängigen Patentansprüche sowie der nachfolgenden Beschreibung.

In dem vorgeschlagenen Verfahren zur Erzeugung eines Wasserstoffprodukts, wird ein erster Teil eines bereitgestellten Ammoniaks überhitzt und in einem Spalteinsatz einer brennerbefeuerten Spaltofenanordnung zugeführt, um mit katalytischer Unterstützung zu einem Wasserstoff, Stickstoff und Ammoniak enthaltenden Spaltgas umgesetzt zu werden, von dem zumindest ein Teil einer Trenneinrichtung zugeführt wird, in der eine Wasserstofffraktion sowie ein gegenüber dem Spaltgas an Stickstoff angereichertes, Wasserstoff und Ammoniak enthaltendes Restgas erhalten werden, von dem zumindest ein Teil zusammen mit einem zweiten Teil des bereitgestellten Ammoniaks zur Befeuerung der Spaltofenanordnung eingesetzt wird.

Ein solches Verfahren kann beispielsweise der EP 4 112 539 A1 entnommen werden. Vorliegend wird nun vorgeschlagen, dass der zweite Teil des bereitgestellten Ammoniaks vor seinem Einsatz zur Befeuerung der Spaltofenanordnung einer Überhitzung unterworfen wird.

Das vorgeschlagene Verfahren nutzt insbesondere die Tatsache, dass das Massenstromverhältnis von Brennstoff zu Verbrennungsluft bei der Ammoniakspaltung bei etwa 1:2 liegt, im Vergleich zu einem entsprechenden Verhältnis von 1:4 bei der klassischen und vielfach vorbeschriebenen Dampfreformierung. Daher ergibt eine Vorwärmung des Reaktionseinsatzes bei der Ammoniakspaltung besondere Vorteile.

Wird in einem entsprechenden herkömmlichen Verfahren nun die Abtrennung eines Wasserstoffprodukts aus einem Spaltgas mittels einer Druckwechseladsorption vorgenommen, liegt das dabei anfallende, als Brennstoff verwendbare Restgas, auf niedrigem Druck vor. Das als Brennstoff eingesetzte Restgas könnte über Wärmetauscher vorgewärmt werden, was allerdings einen Druckverlust bedingt, der den Brennervordruck vermindert. Zum Ausgleich dieses Druckverlusts wäre es möglich, den Restgasdrucks anzuheben, wodurch allerdings die Effizienz der Druckwechseladsorption abnimmt.

Zur Überwindung dieser Nachteile wird erfindungsgemäß vorgeschlagen, den zweiten Teil des bereitgestellten Ammoniaks vor seinem Einsatz zur Befeuerung der Spaltofeneinrichtung zu überhitzen.

Eine zweckmäßige Ausgestaltung des vorgeschlagenen Verfahrens sieht vor, die Überhitzung des zweiten Teils gemeinsam mit dem ersten Teil des bereitgestellten Ammoniaks durchzuführen. Hierdurch kann auf separate Überhitzungseinrichtungen verzichtet werden.

Eine weiter Ausgestaltung des vorgeschlagenen Verfahrens sieht vor, die Überhitzung auf eine Temperatur in einem Bereich von 500 bis 650°C durchzuführen. Dies liegt in einem Bereich, wie er herkömmlicherweise auch für einen Einsatz in die Ammoniakspaltung verwendet werden kann.

Eine andere Ausgestaltung des vorgeschlagenen Verfahrens sieht vor, dass eine Spaltofenanordnung mit einer eine adiabatisch betriebene Vorspalteinheit ("Pre-Cracker") und einer endotherm betriebenen Hauptspalteinheit verwendet wird. Hierdurch ergibt sich einerseits eine vorteilhafte Lastverteilung zwischen den Reaktoren, da der Anteil des Einsatzes, der bereits im Pre-Cracker gespalten wird, nicht mehr in der brennerbefeuerten Hauptspalteinheit behandelt werden muss. Letztere kann daher entsprechend kleiner ausgelegt werden. Hierdurch ergeben sich Einsparungen bei den Investitions- und Betriebskosten, was insgesamt zu einer Effizienzerhöhung führt. Ferner ergeben sich Vorteile hinsichtlich der Materialauswahl. Bei den vorliegenden Reaktionsbedingungen besteht grundsätzlich die Gefahr der Nitridierung (Aufstickung). Die Nitridierung wird durch Ammoniak verursacht. Da im Pre-Cracker bereits ein Teil des Ammoniaks umgesetzt wird, reduziert sich der Partialdruck des Ammoniaks. Die nachgeschaltete Hauptspalteinheit kann daher bei höheren Temperaturen betrieben werden (was normalerweise die Nitridierung fördert).

Eine Ausgestaltung des vorgeschlagenen Verfahrens sieht vor, die Überhitzung unter Verwendung von Wärme eines beim Betrieb des einen oder zumindest eines der mehreren Brenner gebildeten Rauchgases und/oder unter Verwendung von Wärme des Spaltgases oder eines Teils hiervon durchzuführen. Die Überhitzung kann damit unter Verwendung etablierter, ohnehin für die Überhitzung des Spalteinsatzes vorhandener Komponenten durchgeführt werden. Lediglich die Wärmeaustauschfläche in einem Rauchgas- und/oder Spaltgasstrom muss ggf. vergrößert werden. Beliebige Kombinationen der Wärmenutzung von Rauch- und Spaltgas sind möglich, wobei seriell und/oder parallel in den entsprechenden Strömen angeordnete Wärmetauscher verwendet werden können.

Eine Ausgestaltung des vorgeschlagenen Verfahrens sieht vor, dass der zweite Teil des bereitgestellten Ammoniaks einen Anteil von 10 bis 25% einer Gesamtmenge des ersten und zweiten Anteils des bereitgestellten Ammoniaks umfasst.

Eine Ausgestaltung des vorgeschlagenen Verfahrens sieht vor, dass in der Trenneinrichtung eine Druckwechseladsorption durchgeführt wird, wobei das Restgas und die Wasserstofffraktion unter Verwendung der Druckwechseladsorption gebildet werden. Ausgestaltungen des vorgeschlagenen Verfahrens haben hierbei den besonderen Vorteil, dass das Restgas der Druckwechseladsorption in seinem Druck nicht weiter abgesenkt werden muss.

Eine Ausgestaltung des vorgeschlagenen Verfahrens sieht vor, dass der eine oder zumindest einer der mehreren Brenner unter Verwendung eines gegenüber Luft an Sauerstoff angereicherten Oxidatorgases betrieben wird oder werden. Da das Oxidatorgas einen geringeren Stickstoffanteil als Luft besitzt, reduzieren sich sowohl der für die Beheizung der Spaltofenanordnung benötigte Brennstoffbedarf als auch die erzeugte Rauchgasmenge.

Eine Ausgestaltung des vorgeschlagenen Verfahrens sieht vor, dass das Oxidatorgas oder ein Teil hiervon unter Verwendung einer Elektrolyse bereitgestellt wird. Auf diese Weise kann weiterer Wasserstoff bereitgestellt werden.

Eine Ausgestaltung des vorgeschlagenen Verfahrens sieht vor, dass die Elektrolyse unter Verwendung eines Festoxid-Elektrolyseurs durchgeführt wird. Auf diese Weise kann das Oxidatorgas auf erhöhter Temperatur bereitgestellt werden und braucht nicht weiter erwärmt zu werden.

Die vorgeschlagene Anlage zur Erzeugung eines Wasserstoffprodukts ist dafür eingerichtet, mit Ammoniak beschickt zu werden, einen ersten Teil des Ammoniaks in einem Spalteinsatz einer mittels eines oder mehrerer Brenner befeuerten Spaltofenanordnung zuzuführen, zumindest ein Teil des Ammoniaks des Spalteinsatzes in der Spaltofenanordnung katalytisch umzusetzen, der Spaltofenanordnung ein Wasserstoff, Stickstoff und nicht umgesetzten Ammoniak des Spalteinsatzes enthaltendes Spaltgas zu entnehmen, das Spaltgas oder ein Teil hiervon einer Trenneinrichtung zuzuführen, der Trenneinrichtung ein gegenüber dem Spaltgas an Stickstoff angereichertes und einen Teil des Wasserstoffs und des nicht umgesetzten Ammoniaks enthaltendes, brennbares Restgas und eine zur Bereitstellung des Wasserstoffprodukts verwendete Wasserstofffraktion zu entnehmen, das Restgas oder einen Teil hiervon dem einen oder zumindest einem der mehreren Brenner zuzuführen, und einen zweiten Teil des Ammoniaks dem einen oder zumindest einem der mehreren Brenner als Zusatzbrennstoff zuzuführen.

Die vorgeschlagene Anlage ist dafür eingerichtet, den zweiten Teil des Ammoniaks einer Überhitzung zu unterwerfen, bevor dieser dem einen oder zumindest einem der mehreren Brenner als Zusatzbrennstoff zugeführt wird.

Zu weiteren Merkmalen und Vorteilen einer entsprechenden Anlage und Ausgestaltungen hiervon sei auf die obigen Erläuterungen betreffend das vorgeschlagene Verfahren und seine Ausgestaltungen ausdrücklich verwiesen, da diese hierfür in gleicher Weise gelten.

Entsprechendes gilt auch für eine Anlage, die gemäß einer hier vorgeschlagenen Ausgestaltung dazu eingerichtet ist, ein Verfahren gemäß einer beliebigen Ausgestaltung durchzuführen.

### Zeichnungen

Ausführungsformen der Erfindung werden nachfolgend rein beispielhaft unter Bezugnahme auf die beigefügte Zeichnung beschrieben, wobei

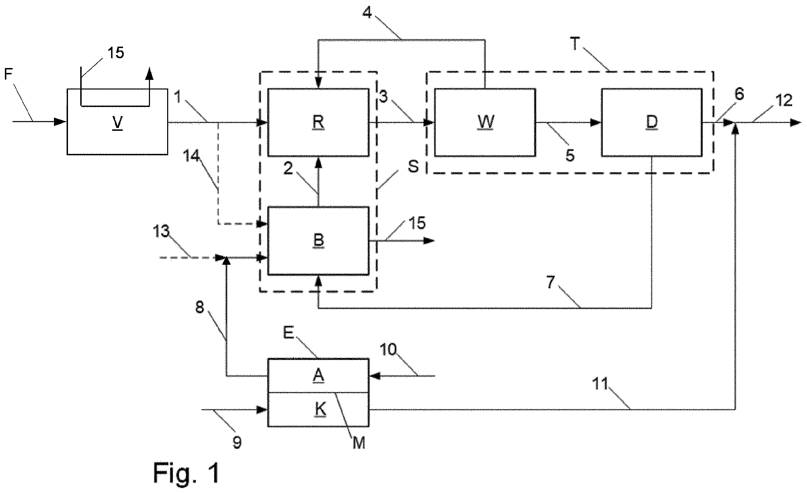

Figur 1 ein Verfahren gemäß einer vorgeschlagenen Ausgestaltung veranschaulicht.

### Ausführungsformen

Die nachfolgend beschriebenen Ausführungsformen und Ausgestaltungen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale vorgeschlagener Verfahren und Vorrichtungen nicht abschließend und/oder beschränkend betrachtet werden. Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Ansprüche oder als Beschränkungen von Äquivalenten hierzu zu betrachten sind, und dass andere Ausführungsformen verwendet und Änderungen vorgenommen werden können, ohne vom Umfang der Ansprüche abzuweichen.

Unterschiedliche Ausführungsformen können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus können andere Ausgestaltungen umfasst sein, die gegenwärtig nicht beansprucht sind, die aber in Zukunft beansprucht werden könnten, insbesondere wenn sie vom Umfang der unabhängigen Ansprüche umfasst sind.

Erläuterungen, die sich auf Vorrichtungen, Apparate, Anordnungen, Systeme usw. gemäß vorgeschlagenen Ausführungsformen beziehen, können auch für Verfahren, Prozesse, Methoden usw. gemäß anderen Ausführungsformen gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

Die nachfolgenden Erläuterungen und Definitionen, die einige Grundlagen hier vorgeschlagener Verfahren betreffen, können für alle oder einen Teil der hier vorgestellten Ausgestaltungen gelten, und die Erläuterung bestimmter Aspekte im Zusammenhang mit nur einem Teil oder einer der Ausgestaltungen soll nicht dahingehend verstanden werden, dass diese Aspekte nicht auch mit anderen oder allen Ausgestaltungen, soweit technisch möglich und sinnvoll, verwirklicht sein können.

Flüssige und gasförmige Stoffströme, Gasgemische oder dergleichen können im hier verwendeten Sprachgebrauch "reich" oder "arm" an einer oder mehreren Komponenten sein, wobei "reich" für einen Gehalt von wenigstens 50%, 75%, 90%, 95%, 99%, 99,5%, 99,9% oder 99,99% und "arm" für einen Gehalt von höchstens 50%, 25%, 10%, 5%, 1%, 0,1% oder 0,01% auf molarer, Gewichts- oder Volumenbasis stehen kann.

Flüssige und gasförmige Stoffströme, Gasgemische oder dergleichen können im hier verwendeten Sprachgebrauch ferner angereichert oder abgereichert an einer oder mehreren Komponenten sein, wobei sich diese Begriffe auf einen Gehalt in einem anderen Stoffstrom beziehen, unter Verwendung dessen der Stoffstrom gebildet wurde. Ein betrachteter Stoffstrom ist dabei "angereichert", wenn er zumindest den 2-fachen, 5-fachen, 10-fachen, 100-fachen oder 1.000-fachen Gehalt der bezeichneten Komponente(n) aufweist, und "abgereichert", wenn er höchstens den 0,5-fachen, 0,1-fachen, 0,01-fachen oder 0,001-fachen Gehalt der bezeichneten Komponente(n) aufweist, jeweils in Bezug auf den Stoffstrom, unter Verwendung dessen der betrachtete Stoffstrom gebildet wurde.

Sämtliche hier verwendeten Prozentangaben können sich auf Mol-, Mengen- oder Volumenanteile beziehen. Druckangaben in bar sind, soweit nicht anders erläutert, insbesondere als Absolutdrücke zu verstehen.

Die Konjunktion "und/oder" soll, wenn in einer Aufzählung vor dem letzten Begriff der Aufzählung verwendet, so verstanden werden, dass alle in der Aufzählung zuvor und danach genannten Begriffe beliebig miteinander kombiniert werden können. Mit anderen Worten ist mit "A, B und/oder C" "A und/oder B und/oder C" oder "wenigstens eines der Elemente A, B und C in beliebiger Kombination" gemeint.

Ist vorliegend von einem "Teil" eines Stoffstroms die Rede, kann es sich hierbei um einen Mengenanteil mit gleicher Zusammensetzung handeln, der von einem Ausgangsstrom lediglich abgezweigt wurde, aber auch um einen Anteil abweichender Zusammensetzung und ggf. nur eine Komponente des Ausgangsstroms, der mittels eines Verfahrens wie Kondensation, Evaporation, Sieden, Destillieren, Rektifizieren, Absorbieren, Adsorbieren, Flashen, Membrantrennen, Abscheiden oder dergleichen gebildet wird oder bei einem entsprechenden Schritt als Rest verbleibt. Ein "Teil" kann auch nach einer Kombination beliebiger der vorstehend benannten Schritte vorliegen, beispielsweise nach trenntechnischer Bearbeitung abgezweigten Anteils.

Verfahren zur Herstellung von Wasserstoff sind vielfach in der Literatur beschrieben. Statt vieler sei beispielsweise auf den Artikel von A.O. Oni et al., "Comparative assessment of blue hydrogen from steam methane reforming, autothermal reforming, and natural gas decomposition technologies for natural gas-producing regions", Energy Conversion and Management 254 (2022) 115245, verwiesen, der in den Figuren 2 bis 4 solche Verfahren zeigt und in den jeweils zugehörigen Textpassagen beschreibt. Zur Herstellung von Wasserstoff durch Ammoniakspaltung sei insbesondere auf die bereits zuvor zitierte EP 4 112 539 A1 verwiesen.

Um Wasserstoff aus Ammoniak herzustellen, können ähnliche Anlagen eingesetzt werden, wie sie heute zur großtechnischen Synthesegaserzeugung durch Dampfreformierung von Kohlenwasserstoffen verwendet werden. Derartige Anlagen umfassen einen Spaltofen mit einem Feuerraum, in dem mit Katalysatormaterial gefüllte Spaltrohre angeordnet sind, sowie ein Abhitzesystem. Vorliegend ist auch von einer "Spaltofenanordnung" die Rede, die ggf. mehrere Spaltöfen umfassen kann.

Die Figur 1 zeigt die Erzeugung von Wasserstoff aus Ammoniak gemäß einer hier vorgeschlagenen Ausgestaltung, bei der ein Elektrolyseur mit einer Festoxid-Elektrolysezelle als Sauerstoffquelle verwendet wird. Die Verwendung eines Elektrolyseurs, oder eine sauerstoffangereicherte Verbrennung an sich, sind jedoch nicht wesentlich für die hier vorgeschlagenen Verfahren, sondern stellen optionale Ausgestaltungen mit weiteren Vorteilen dar. Diesbezüglich wird ausdrücklich auf die zuvor zitierte EP 4 112 539 A1 verwiesen.

Mit einem Einsatzstrom F wird gemäß Figur 1 Ammoniak bereitgestellt. Dieser wird in einer Vorwärm- bzw. Überhitzungseinheit V überhitzt. Ein entsprechend gebildeter, überhitzter Stoffstrom 1 wird einer Spaltofeneinheit S zugeführt. Es handelt sich typischerweise um einen weitgehend aus Ammoniak bestehenden, Wasser enthaltender Stoffstrom 1, der in die Spaltrohre R eingeleitet wird, die mit Wärme 2 beheizt werden, welche mittels eines oder mehrerer Brenner B erzeugt wird.

Mit katalytischer Unterstützung wird bei Temperaturen zwischen 500 und 1000°C der überwiegende Teil des zugeführten Ammoniaks gespalten, so dass den Spaltrohren R ein heißes, weitgehend aus Stickstoff und Wasserstoff bestehendes, Wasser und nicht umgesetzten Ammoniak enthaltendes Spaltgas 3 entnommen und in eine Trenneinrichtung T überführt werden kann. In einer zur Trenneinrichtung T gehörenden, optionalen Wasserwäsche W wird das Spaltgas 3 auf Temperaturen zwischen 30 und 70 °C abgekühlt, wobei Wasser auskondensiert, welches seinerseits einen Großteil des enthaltenen Ammoniaks auswäscht.

Während ein dabei gebildetes Ammoniak-Wasser-Gemisch 4 zur Erhöhung der Wasserstoffausbeute des Verfahrens in die Spaltrohre R zurückgeführt werden kann, wird das weitgehend wasser- und ammoniakfreie Spaltgas 5 in eine Druckwechseladsorption D geleitet, wo es in eine Produktreinheit aufweisende Wasserstofffraktion 6 und ein Restgas 7 getrennt wird. Das Restgas 7, das zum überwiegenden Teil aus Stickstoff besteht, daneben aber auch brennbare Komponenten wie Ammoniak und Wasserstoff enthält, wird dem oder den Brennern B als Brennstoff zugeführt und gemeinsam mit einem Oxidationsmittel 8 verbrannt. Die Restwärme der gegen die Spaltrohre R abgekühlten Rauchgase 15 des Brenners B wird in einem Abhitzesystem, dessen Teil die Vorwärmeinrichtung V ist, zur Verdampfung und Überhitzung des Ammoniaks des Einsatzstroms F verwendet.

Das Oxidationsmittel 8, das im dargestellten Beispiel einen höheren Sauerstoffgehalt als Luft aufweist, wird dem als Sauerstoffquelle fungierenden Elektrolyseurs E entnommen. Der eine Festoxid-Elektrolysezelle umfassende Elektrolyseur E spaltet bei Betriebstemperaturen zwischen 500 und 950 °C Wasserdampf. In der Elektrolysezelle trennt ein aus einem für Sauerstoffionen leitfähigen Material bestehender Elektrolyt M einen Kathoden- K von einem Anodenraum A. Der in den Kathodenraum K eingebrachte Wasserdampf 9 wird an der Grenzfläche zum Elektrolyten M in Wasserstoff, der auf der Kathodenseite verbleibt, und Sauerstoffionen gespalten, die zur Anodenseite wandern, wo sie zu Sauerstoffmolekülen oxidiert werden. Der Anodenraum A wird mit Luft 10 gespült, wobei das heiße Oxidationsmittel 8 entsteht, das ohne Kühlung dem oder den Brennern B zugeführt wird. Aus dem Kathodenraum K wird ein wasserstoffreicher Stoffstrom 11 abgezogen und mit der Produktreinheit aufweisenden Wasserstofffraktion 6 zum Wasserstoffprodukt 12 gemischt. Optional kann dem oder den Brennern B Luft 13 als weiters Oxidationsmittel zugeführt werden.

Die hier vorgeschlagenen Ausgestaltungen umfassen, einen Teil des überhitzten Einsatzstroms F in Form eines Stoffstroms 14 dem oder den Brennern B als Zusatzbrennstoff zuzuführen.

Mit anderen Worten umfasst die Bereitstellung des Wasserstoffprodukts 12 in der hier veranschaulichten Ausgestaltung die Bereitstellung von Ammoniak in dem Einsatzstrom F, wobei ein erster Teil des bereitgestellten Ammoniaks in einem Spalteinsatz 1 einer mittels eines oder mehrerer Brenner B befeuerten Spaltofenanordnung S zugeführt wird, zumindest ein Teil des Ammoniaks des Spalteinsatzes 1 in der Spaltofenanordnung S katalytisch umgesetzt wird, der Spaltofenanordnung S ein Wasserstoff, Stickstoff und nicht umgesetzten Ammoniak des Spalteinsatzes 1 enthaltendes Spaltgas 3 entnommen wird, das Spaltgas 3 oder ein Teil hiervon einer Trenneinrichtung T zugeführt wird, der Trenneinrichtung T ein gegenüber dem Spaltgas 3 an Stickstoff angereichertes und einen Teil des Wasserstoffs und des nicht umgesetzten Ammoniaks enthaltendes, brennbares Restgas 7 und eine Wasserstofffraktion 6 entnommen wird, das Restgas 7 oder ein Teil hiervon dem einen oder zumindest einem der mehreren Brenner B zugeführt wird, ein zweiter Teil bereitgestellten Ammoniaks dem einen oder zumindest einem der mehreren Brenner B als Zusatzbrennstoff zugeführt wird.

Der zweite Teil des bereitgestellten Ammoniaks wird hier zusammen mit dem Spalteinsatz 1 einer Überhitzung in der Vorwärmeinrichtung V unterworfen, bevor dieser dem einen oder zumindest einem der mehreren Brenner B in Form des Stoffstroms 14 als Zusatzbrennstoff zugeführt wird. Es kann in anderen Ausgestaltungen aber auch eine separate Erwärmung, Verdampfung und Überhitzung erfolgen.

Nachfolgend werden nochmals Aspekte von hier vorgeschlagenen Ausgestaltungen mit anderen Worten zusammengefasst.

Die von dem oder den Brennern B erzeugten Rauchgase können nur einen kleinen Teil ihrer fühlbaren Wärme an die Spaltrohre R abgeben, so dass sie den Feuerraum mit hoher Temperatur und einem großen Inhalt an Restwärme verlassen. Um die Wasserstofferzeugung effizient durchführen zu können, werden die heißen Rauchgase ebenso wie das heiß aus den Spaltrohren R strömende Spaltgas zur Vorwärmung des Spalteinsatzes 1 und Brennerluft sowie ggf. zur Dampferzeugung genutzt. Die vorgeschlagenen Ausgestaltungen umfassen auch eine entsprechende Erwärmung und Überhitzung von Ammoniak als Brennstoff.

Damit der erzeugte Wasserstoff ohne oder mit nur geringem Verdichtungsaufwand als Produkt abgegeben werden kann, wird die Ammoniakspaltung zweckmäßigerweise bei Drücken zwischen 10 und 40 bar durchgeführt. Dies ist umso einfacher möglich, als der Druck des gewöhnlich flüssig vorliegenden Ammoniak enthaltenden Einsatzstoffs mit wenig Energieaufwand erhöht werden kann. Damit unter diesen Bedingungen ein ausreichend hoher, wirtschaftlich sinnvoller Umsetzungsgrad des eingesetzten Ammoniaks erreicht wird, ist es besonders vorteilhaft, die Ammoniakspaltung bei Temperaturen zwischen 500 und 1000 °C zu betreiben.

Das Spaltgas 3 besteht zu einem großen Teil aus Wasserstoff und Stickstoff, enthält daneben aber auch nicht umgesetzten Ammoniak sowie evtl. Wasser, das bereits in dem eingesetzten Ammoniak vorliegt bzw. zusätzlich als Temperaturmoderator in die Spaltrohre eingeleitet wird, jedoch nicht an der Spaltreaktion teilnimmt.

Zur Gewinnung des Wasserstoffs wird das Spaltgas 3 der erwähnten Trenneinrichtung T zugeführt, in der es nach der Entfernung des überwiegenden Teils des nicht umgesetzten Ammoniaks und der Abtrennung W von enthaltenem Wasser vorzugsweise durch Druckwechseladsorption D behandelt wird, wobei eine weitgehend stickstofffreie Wasserstofffraktion 6 sowie ein zum Großteil aus Stickstoff bestehendes und Ammoniak enthaltendes, brennbares Restgas 7 erzeugt werden. Während die Wasserstofffraktion 6 als Produkt abgegeben werden kann, wird das Restgas 7 zurückgeführt und zur Befeuerung des Spaltofens S verbrannt.

Aufgrund seines hohen Stickstoffanteils ist der Heizwert des Restgases 7 vergleichsweise gering, so dass zur Beheizung des Spaltofens u.U. weiterer Brennstoff, wie z.B. Ammoniak, zugefeuert werden muss. Dies erfolgt im Rahmen von hier vorgeschlagenen Ausgestaltungen in Form von überhitztem Ammoniak.

Wird ein Oxidatorgas 8, das einen geringeren Stickstoffanteil als Luft besitzt, verwendet, reduziert sich gegenüber dem Stand der Technik sowohl der für die Beheizung des Spaltofens benötigte Brennstoffbedarf als auch die erzeugte Rauchgasmenge. Zur Nutzung der Restwärme des Rauchgases kann das Abhitzesystem daher kostengünstiger mit kleineren bzw. weniger Wärmetauschern ausgeführt werden. Wegen seines hohen Stickstoffgehalts ist es möglich, das Restgas 7 unabhängig vom Sauerstoffgehalt des eingesetzten Oxidationsmittels über konventionelle Brenner zu verfeuern, wie sie auch zur Restgasverfeuerung mit Luft eingesetzt werden.

Bei der Ammoniakspaltung wird stets ein Teil des eingesetzten Ammoniaks nicht umgesetzt und gelangt unverändert in das Spaltgas 3, aus dem es zum Erhalt eines Wasserstoffprodukts 12 abgetrennt werden muss. Die Menge des nicht umgesetzten Ammoniaks erhöht sich mit sinkender Reaktionstemperatur und steigendem Reaktionsdruck. Ist der Ammoniakgehalt des Spaltgases 3 gering, wird der Ammoniak vorzugsweise allein durch Druckwechseladsorption D abgetrennt und mit dem Restgas thermisch verwertet. Bei höheren Ammoniakgehalt kann es allerdings wirtschaftlicher sein, Ammoniak zusätzlich stromaufwärts der Druckwechseladsorption aus dem Spaltgas zu entfernen und stofflich zu verwerten.

Es kann vorgesehen sein, Spaltgas 3 bis unter den Wassertaupunkt abzukühlen, so dass Wasser kondensiert und Ammoniak durch das kondensierte Wasser aus dem Spaltgas 3 ausgewaschen wird.

Wenn das Spaltgas auf Temperaturen zwischen 30°C und 70°C abgekühlt wird, reicht die Menge des als Temperaturmoderator zusammen mit dem Ammoniak in die Spaltrohre eingeleiteten Wassers aus, um den Ammoniakgehalt soweit zu reduzieren, dass der im Spaltgas verbleibende Teil des Ammoniaks ohne wirtschaftliche Nachteile durch die Druckwechseladsorption abgetrennt werden kann. Eine gesonderte Zuführung von Waschwasser ist zumindest im Normalbetrieb nicht notwendig.

Vorzugsweise wird das in der Wasserwäsche erhaltene Ammoniak/Wasser-Gemisch wieder im Spaltofen eingesetzt, wobei der größte Teil des Gemisches zur Wasserstoffgewinnung in die Spaltrohre geführt und der restliche Teil zur Einstellung der in die Spaltrohre eigebrachten Wassermenge geregelt ausgeschleust und beispielsweise zur Befeuerung des Spaltofens verwendet wird.

Bei dieser Verfahrensweise kann es vorkommen, dass während des Anfahrbetriebs nicht genügend Wasser zum Spaltofen zurückgeführt wird, um den Ammoniakgehalt des Spaltgases durch Wäsche mit auskondensiertem Wasser ausreichend weit zu reduzieren. Für diesen Fall ist erfindungsgemäß vorgesehen, der Wasserwäsche zusätzlich Wasser von außen zuzuführen.

Zur Vermeidung einer Überhitzung des Spaltofens während des Abfahrbetriebs ist vorgesehen, die Spaltrohre mit Dampf oder Stickstoff zu kühlen.

## Patentansprüche

1. Verfahren zur Erzeugung eines Wasserstoffprodukts (12), bei dem ein erster Teil eines bereitgestellten Ammoniaks (F) überhitzt und in einem Spalteinsatz (1) einer brennerbefeuerten Spaltofenanordnung (S) zugeführt wird, um mit katalytischer Unterstützung zu einem Wasserstoff, Stickstoff und Ammoniak enthaltenden Spaltgas (3) umgesetzt zu werden, von dem zumindest ein Teil einer Trenneinrichtung (T) zugeführt wird, in der eine Wasserstofffraktion (6) sowie ein gegenüber dem Spaltgas (3) an Stickstoff angereichertes, Wasserstoff und Ammoniak enthaltendes Restgas (7) erhalten werden, von dem zumindest ein Teil zusammen mit einem zweiten Teil (14) des bereitgestellten Ammoniaks (F) zur Befeuerung der Spaltofenanordnung (S) eingesetzt wird, **dadurch gekennzeichnet, dass** der zweite Teil (14) des bereitgestellten Ammoniaks (F) vor seinem Einsatz zur Befeuerung der Spaltofeneinrichtung (S) überhitzt wird.

2. Verfahren nach Anspruch 1, bei dem der zweite Teil (14) des bereitgestellten Ammoniaks (F) zusammen mit dem ersten Teil des bereitgestellten Ammoniaks (F) überhitzt wird.

3. Verfahren nach Anspruch 1 oder 2, bei dem die Überhitzung auf eine Temperatur in einem Bereich von 500 bis 650°C durchgeführt wird.

4. Verfahren nach einem der vorstehenden Ansprüche, bei dem die Spaltofenanordnung (S) eine adiabat betriebene Vorspalteinheit umfasst.

5. Verfahren nach einem der vorstehenden Ansprüche, bei dem die Überhitzung unter Verwendung von Wärme eines bei der Befeuerung der Spaltofenanordnung (S) gebildeten Rauchgases (15) und/oder unter Verwendung von Wärme des Spaltgases (3) durchgeführt wird.

6. Verfahren nach einem der vorstehenden Ansprüche, bei dem der zweite Teil (14) des bereitgestellten Ammoniaks (F) einen Anteil von 10 bis 25% an der Gesamtmenge des ersten und zweiten Teils (14) Anteils des bereitgestellten Ammoniaks (F) ausmacht.

7. Verfahren nach einem der vorstehenden Ansprüche, bei dem in der Trenneinrichtung (T) eine Druckwechseladsorption (D) durchgeführt wird, wobei das Restgas (7) und das Wasserstoffprodukt (6) unter Verwendung der Druckwechseladsorption (D) gebildet werden.

8. Verfahren nach einem der vorstehenden Ansprüche, bei dem die Brennerbefeuerung der Spaltofenanordnung (S) unter Verwendung eines gegenüber Luft an Sauerstoff angereicherten Oxidatorgases (8) durchgeführt wird.

9. Verfahren nach Anspruch 8, bei dem das Oxidatorgas (8) oder ein Teil hiervon unter Verwendung einer Elektrolyse (E) bereitgestellt wird.

10. Verfahren nach Anspruch 9, bei dem die Elektrolyse (E) unter Verwendung eines Festoxid-Elektrolyseurs durchgeführt wird.

11. Anlage zur Erzeugung eines Wasserstoffprodukts (6), die dafür eingerichtet ist, mit Ammoniak beschickt zu werden, einen ersten Teil des Ammoniaks, in einem Einsatzgas (1) einer mittels eines oder mehrerer Brenner (B) befeuerten Spaltofenanordnung (S) zuzuführen, zumindest ein Teil des Ammoniaks des Einsatzgases (1) in der Spaltofenanordnung (S) katalytisch umzusetzen, der Spaltofenanordnung (S) ein Wasserstoff, Stickstoff und nicht umgesetzten Ammoniak des Einsatzgases (1) enthaltendes Spaltgas (3) zu entnehmen, das Spaltgas (3) oder ein Teil hiervon einer Trenneinrichtung (T) zuzuführen, der Trenneinrichtung (T) ein gegenüber dem Spaltgas (3) an Stickstoff angereichertes und einen Teil des Wasserstoffs und des nicht umgesetzten Ammoniaks enthaltendes, brennbares Restgas (7) und das Wasserstoffprodukt (6) zu entnehmen, das Restgas (7) oder einen Teil hiervon dem einen oder zumindest einem der mehreren Brenner (B) zuzuführen, und einen zweiten Teil des Ammoniaks dem einen oder zumindest einem der mehreren Brenner (B) als Zusatzbrennstoff zuzuführen, **dadurch gekennzeichnet, dass** die Anlage dafür eingerichtet ist, den zweiten Teil des Ammoniaks einer Überhitzung zu unterwerfen, bevor dieser dem einen oder dem zumindest einen der mehreren Brenner (B) als Zusatzbrennstoff zugeführt wird

12. Anlage nach Anspruch 11, die zur Durchführung eines Verfahrens nach einem der Ansprüche 1 bis 10 eingerichtet ist.
